# FASCICULE DE BREVET EUROPEEN

(11) **EP 0 845 404 B1**
(45) Date de publication et mention de la délivrance du brevet: **25.07.2001**
(21) Numéro de dépôt: 97402801.1
(22) Date de dépôt: 21.11.1997
(51) Int. Cl.: B62D 25/08, B62D 25/14

(54) **Cloison transversale de carrosserie automobile équipée d'un support de renforcement**
Feuerschutzwand für eine Kraftfahrzeugkarosserie mit einer Verstärkungsstütze
Firewall for an automobile body, equiped with a reinforced supporting structure

(30) Priorité: 29.11.1996 FR 9614644
(43) Date de publication de la demande: 03.06.1998
(73) Titulaire: RENAULT, 92109 Boulogne-Billancourt (FR); MATRA AUTOMOBILES SA, 78191 Trappes Cédex (FR)
(72) Inventeur: Demaldent, Jean-Michel, 78580 Maule (FR); Gros, Christian, 78400 - Chatou (FR)
(74) Mandataire: Fernandez, Francis Lionel

(56) Documents cités:
- EP-A- 0 266 255
- DE-A- 4 424 288
- US-A- 5 082 078

## Description

L'invention concerne une cloison transversale de carrosserie automobile équipée d'un support de renforcement constitué par un profil monté en appui sur ladite cloison et qui s'étend le long de cette dernière.

La publication DE-A-4.138.393 décrit une cloison équipée d'un support de renforcement en aluminium destiné au montage d'ancrages de ceintures de sécurité. A cet effet la section du profil affecte la forme d'une glissière de montage des éléments de fixation des ceintures de sécurité.

Lorsque la cloison transversale est attenante à un boîtier de direction, les vibrations de ladite cloison sont transmises dudit boîtier de direction. Les efforts de contrainte exercés par l'essieu directeur sur un tel boîtier support d'une crémaillère de direction sont dans ce cas transmises à la cloison sous forme de vibrations. L'amortissement de ces vibrations nécessite des moyens antivibratoires et de renforcement de la cloison.

Conformément à l'invention le problème est résolu en ce que deux zones d'appui du support sur la cloison sont adjacentes à des compartiments creux séparés par une paroi de fixation du mécanisme de direction du véhicule.

La cloison ainsi réalisée possède l'avantage de pouvoir être utilisée pour l'équipement de véhicules dont le mécanisme de direction ne peut être monté sur un châssis auxiliaire ou sur une traverse de liaison des longerons latéraux du véhicule.

La cloison ainsi réalisée trouve avantageusement une application sur les véhicules compacts sur lesquels l'espace libéré sous la partie extérieure des longerons peut être occupé par des éléments de structure de châssis plus résistants. De ce fait la section des éléments longitudinaux du châssis pourra être avantageusement augmentée. La disposition constructive précitée offre également une possibilité de localiser le groupe motopropulseur à proximité de la cloison et de raccourcir de manière intéressante la structure avant du véhicule.

Selon une autre caractéristique de l'invention, le support de renforcement et le mécanisme de direction constituent un ensemble de montage séparable de la cloison.

La disposition précitée permet de la sorte la confection d'un sous-ensemble préassemblé susceptible d'être incorporé sur le site d'assemblage du véhicule.

Selon une troisième caractéristique de l'invention, le support de renforcement est constitué par un profil extrudé en aluminium monté en appui le long d'une première paroi sensiblement verticale de la cloison, limitée vers le bas par un premier pli à partir duquel s'étend parallèlement la paroi de fixation du mécanisme bordée par les compartiments creux et cette dernière paroi est fixée à proximité d'un deuxième pli d'une autre paroi oblique de la cloison.

L'agencement des compartiments creux à proximité des zones de fixation du profil permet d'absorber dans une large mesure les vibrations du mécanisme de direction.

La cloison transversale équipée conformément à l'invention de son support de renforcement contribue par voie de conséquence à l'insonorisation de l'habitacle du véhicule.

D'autres caractéristiques et avantages de l'invention apparaîtront à la lecture de la description d'un exemple de réalisation de la cloison en référence aux dessins annexés dans lesquels :
- la figure 1 est une représentation schématique d'une carrosserie de véhicule automobile qui illustre la localisation du support de fixation du mécanisme de direction,
- la figure 2 est une représentation perspective de la structure avant du châssis de la carrosserie représentée à la figure 1,

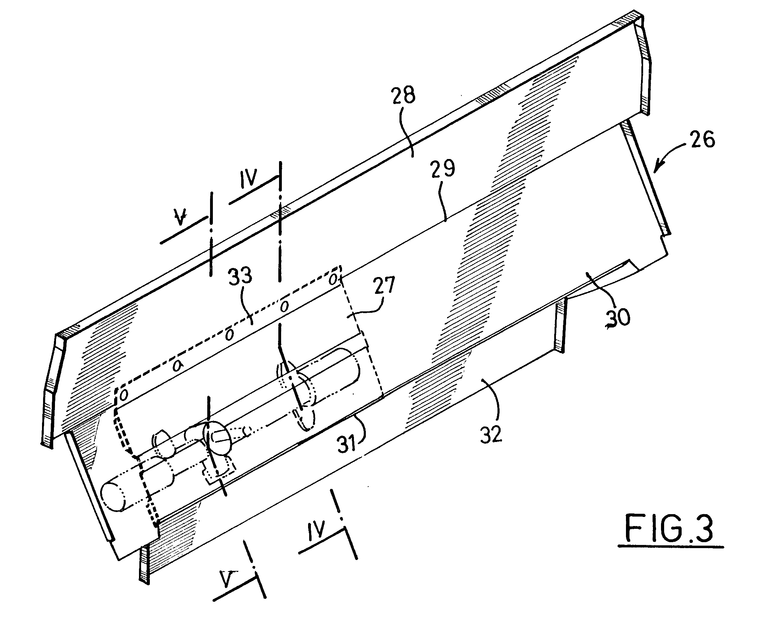

- la figure 3 est une représentation perspective de la cloison transversale de carrosserie isolée de la structure représentée à la figure 2.
- les figures 4 et 5 représentent les coupes IV-IV et V-V- de la cloison représentée à la figure 3.

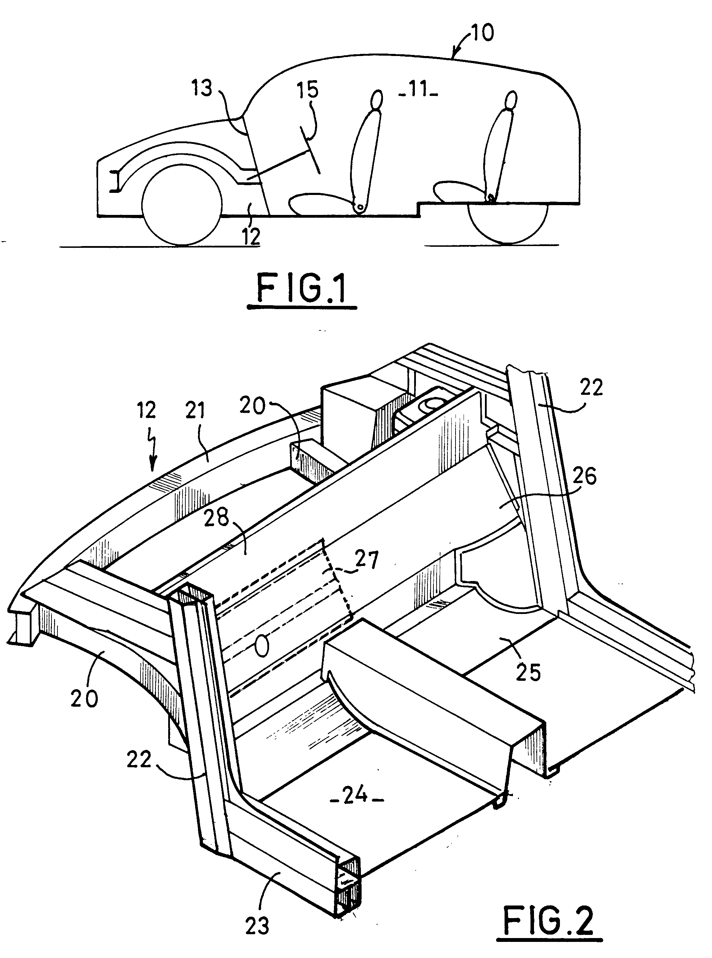

En référence à la figure 1, la carrosserie 10 d'un véhicule automobile inclut un habitacle 11 et une structure avant 12 séparés par une cloison transversale 13 de support de la planche de bord et du mécanisme de direction 15.

La structure 12 représentée plus en détail à la figure 2 possède essentiellement deux longerons latéraux 20 entretoisés par une traverse avant 21 qui sont respectivement raccordés aux montants avant 22. Les montants 22 sont assemblés aux tronçons longitudinaux 23 des longerons associés au plancher 24. Le bord antérieur du plancher 24 est juxtaposé à une cloison pare-feu 25 qui s'étend vers le haut par la cloison transversale 26 équipée du support de renforcement 27. La partie supérieure 28 de la cloison 26 constitue par exemple une face de jonction ou de support de la planche de bord non représentée.

La partie supérieure 28 de la cloison constitue une paroi sensiblement verticale, limitée vers les bas par un premier pli 29 à partir duquel s'étend parallèlement une paroi oblique 30 de la cloison 26.

La paroi oblique 30 est elle même limitée par un deuxième pli 31 d'une autre paroi oblique 32 de la cloison 26.

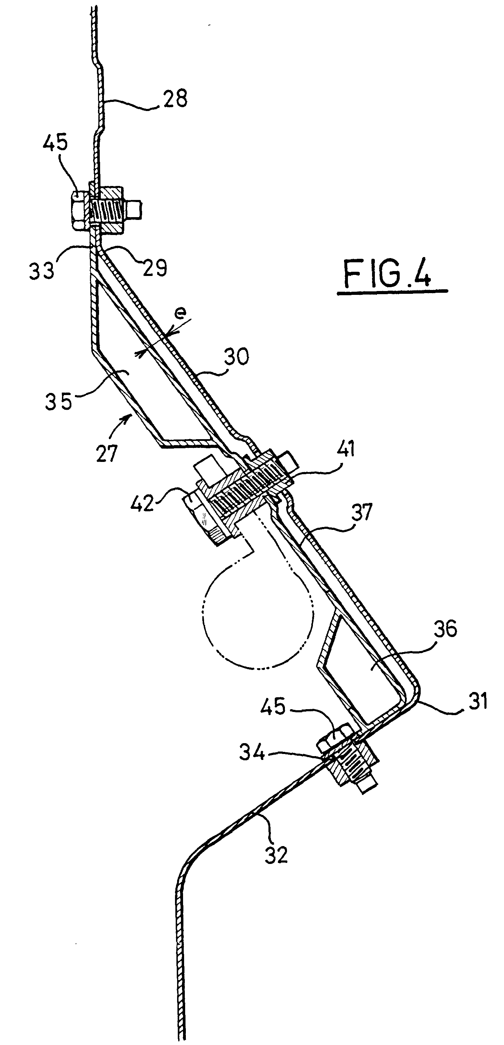

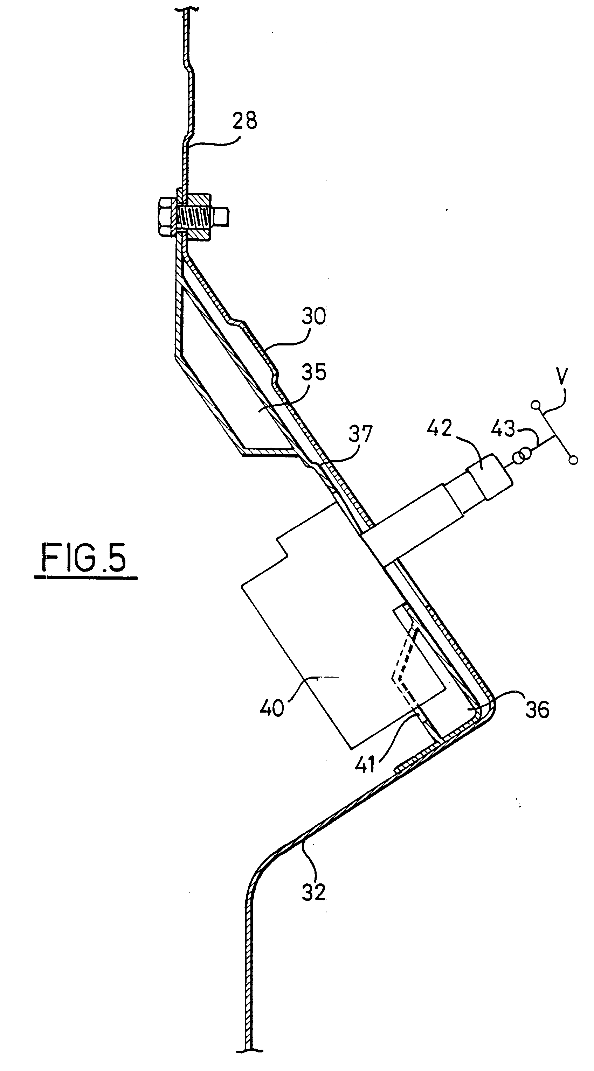

Le support de renforcement 27 peut être constitué, ainsi que cela est montré aux figures 4 et 5 par un profil extrudé en aluminium.

Le profil est monté en appui respectivement le long de la paroi 28 à proximité du pli 29. A cet effet le profil possède une première aile de fixation 33.

Le profil est également monté en appui le long de la paroi oblique 32 à proximité du pli 31. A cet effet le profil possède une deuxième aile de fixation 34.

Les ailes ou zones d'appui et de fixation 33, 34 sont adjacentes, ainsi que cela est montré au dessin, à des compartiments 35, 36 séparés par une paroi de fixation 37 du mécanisme de direction 40.

A cet effet la paroi 37 porte deux écrous de fixation 41 de réception des vis de montage 42 du mécanisme de direction 40 comme indiqué à la figure 4.

Le mécanisme de direction 40 et le profil constitutif du support 27 sont avantageusement montés sur le véhicule en tant qu'ensemble préassemblé à l'extérieur de la chaîne de montage du véhicule. Le montage précité est facilité par l'adjonction d'organes de boulonnerie sur les parois 28, 32 dans le but de favoriser l'emploi de vis de fixation 45 au contact des ailes 33, 34 et à proximité des plis 29, 31 de la cloison 26. Ainsi que le montre le dessin la paroi de fixation 37 du mécanisme 40 s'étend parallèlement à la paroi 30 de la cloison 26 et transversalement au plan longitudinal du véhicule avec un écartement "e" desdites parois 37, 30 suffisant pour favoriser la réalisation d'un "piège à son" qui évite la propagation des vibrations générées par le mécanisme 40 à l'intérieur de l'habitacle du véhicule.

Par voie de conséquence on voit que les compartiments 35, 36 rigidifient le support 27 et permettent conjointement avec la paroi 37 d'éviter la transmission des vibrations.

Ainsi que cela est montré à la figure 5, le compartiment 36 de la paroi de fixation 37 porte le logement d'une partie du boîtier de montage du mécanisme de direction. Ce logement est avantageusement réalisé par une découpe 41 réalisée dans la paroi du compartiment 36.

La figure 5 montre également la localisation de la queue 42 d'actionnement du pignon de commande de la crémaillère de direction. La queue 42 est entraînée ainsi que cela est bien connu par un arbre de direction 43 actionné par un volant V.

## Revendications

1. Cloison transversale de carrosserie automobile équipée d'un support de renforcement (27) constitué par un profil monté en appui sur ladite cloison (26) et qui s'étend le long de cette dernière, caractérisée par le fait que deux zones d'appui (33, 34) du support (27) sur la cloison (26) sont adjacentes à des compartiments creux (35, 36) séparés par une paroi (37) de fixation d'un mécanisme de direction (40) du véhicule, lesdits compartiments creux et ladite paroi de fixation appartenant audit support de renforcement.

2. Cloison selon la revendication 1, caractérisée par le fait que le support de renforcement (27) et le mécanisme de direction (40) constituent un ensemble de montage séparable de la cloison.

3. Cloison selon l'une quelconque des revendications 1 ou 2, caractérisée par le fait que le support de renforcement (27) est constitué par un profil extrudé en aluminium monté en appui le long d'une première paroi sensiblement verticale (28) de la cloison (26), limitée vers le bas par un premier pli (29) à partir duquel s'étend parallèlement une paroi de fixation (37) du mécanisme de direction (40) et que cette dernière est fixée à proximité d'un deuxième pli (31) d'une autre paroi oblique (32) de la cloison (26).

4. Cloison selon l'une quelconque des revendications 1 à 3, caractérisée par le fait que l'un des compartiments (36) de la paroi de fixation (37) du mécanisme de direction (40) porte une découpe (41) qui constitue le logement d'une partie du boîtier de montage dudit mécanisme.

5. Cloison selon l'une quelconque des revendications 1 à 4, caractérisée par le fait que la paroi de fixation (37) du mécanisme de direction (40) et la paroi (30) de la cloison transversale (26) s'étendent parallèlement avec un écartement "e" transversalement au plan longitudinal du véhicule.

## Patentansprüche

1. Quertrennwand einer Kraftfahrzeugkarosserie, die mit einem Verstärkungsträger (27) ausgestattet ist, der aus einem Profil besteht, das in Auflage auf der Trennwand (26) montiert ist und das sich entlang dieser letzteren erstreckt, dadurch gekennzeichnet, daß zwei Zonen der Auflage (33, 34) des Trägers (27) auf der Trennwand (26) an Hohlräume (35, 36) angrenzen, die von einer Wand (37) zur Befestigung eines Lenkgetriebes (40) des Fahrzeugs getrennt werden, wobei die Hohlräume und die Befestigungswand zum Verstärkungsträger gehören.

2. Trennwand nach Anspruch 1, dadurch gekennzeichnet, daß der Verstärkungsträger (27) und das Lenkgetriebe (40) eine von der Trennwand trennbare Baugruppe bilden.

3. Trennwand nach irgendeinem der Ansprüche 1 oder 2, dadurch gekennzeichnet, daß der Verstärkungsträger (27) aus einem stranggepreßten Aluminiumprofil besteht, das in Auflage entlang einer ersten, im wesentlichen vertikalen Wand (28) der Trennwand (26) montiert ist, die nach unten durch einen ersten Knick (29) begrenzt wird, ab dem sich parallel eine Wand (37) zur Befestigung des Lenkgetriebes (40) erstreckt, und daß diese letztere in der Nähe eines zweiten Knickes (31) einer anderen schrägen Wand (32) der Trennwand (26) befestigt ist.

4. Trennwand nach irgendeinem der Ansprüche 1 bis 3, dadurch gekennzeichnet, daß einer (36) der Räume der Wand (37) zur Befestigung des Lenkgetriebes (40) einen Ausschnitt (41) trägt, der die Aufnahme für einen Teil des Montagegehäuses dieses Getriebes bildet.

5. Trennwand nach irgendeinem der Ansprüche 1 bis 4, dadurch gekennzeichnet, daß sich die Wand (37) zur Befestigung des Lenkgetriebes (40) und die Wand (30) der Quertrennwand (26) parallel mit einem Abstand "e" und quer zur Längsebene des Fahrzeugs erstrecken.

## Claims

1. A transverse partition of an automobile vehicle bodywork fitted with a reinforcing support (27) formed by a profiled section mounted to bear on the partition (26) and extending along the latter, characterised in that two support zones (33, 34) of the support (27) on the partition (26) are adjacent to hollow compartments (35, 36) separated by a fastening wall (37) of a steering mechanism (40) of the vehicle, the hollow compartments and the fastening wall belonging to the reinforcing support.

2. A partition as claimed in claim 1, characterised in that the reinforcing support (27) and the steering mechanism (40) form a mounting assembly that can be separated from the partition.

3. A partition as claimed in any one of claims 1 or 2, characterised in that the reinforcing support (27) is formed by a extruded aluminium profiled section mounted to bear along a first substantially vertical wall (28) of the partition (26), limited at the bottom by a first fold (29) from which a fastening wall (37) of the steering mechanism (40) extends in parallel and in that the latter is fastened in the vicinity of a second fold (31) of a further oblique wall (32) of the partition (26).

4. A partition as claimed in any one of claims 1 to 3, characterised in that one of the compartments (36) of the fastening wall (37) of the steering mechanism (40) bears a cut-out section (41) which forms the housing for a part of the assembly housing of the mechanism.

5. A partition as claimed in any one of claims 1 to 4, characterised in that the fastening wall (37) of the steering mechanism (40) and the wall (30) of the transverse partition (26) extend in parallel with a spacing "e" transverse to the longitudinal plane of the vehicle.
